# EUROPÄISCHE PATENTSCHRIFT

(11) **EP 2 641 263 B1**
(45) Veröffentlichungstag und Bekanntmachung des Hinweises auf die Patenterteilung: **19.03.2014**
(21) Anmeldenummer: 11785328.3
(22) Anmeldetag: 31.10.2011
(51) Int. Cl.: B01J 19/12, H01K 1/38, H01K 3/20, H05B 3/44, H05B 3/00

(54) **BESTRAHLUNGSVORRICHTUNG**
IRRADIATION DEVICE
DISPOSITIF D'IRRADIATION

(30) Priorität: 19.11.2010 DE 102010051711; 13.10.2011 DE 102011115841
(43) Veröffentlichungstag der Anmeldung: 25.09.2013
(73) Patentinhaber: Heraeus Noblelight GmbH, 63450 Hanau (DE)
(72) Erfinder: LINOW, Sven, 64285 Darmstadt (DE)
(74) Vertreter: Kühn, Hans-Christian
(86) Internationale Anmeldenummer: PCT/EP2011/005494
(87) Internationale Veröffentlichungsnummer: WO 2012/065688

(56) Entgegenhaltungen:
- EP-A2- 0 629 488
- DE-A1-102008 063 677
- GB-A- 952 939
- JP-A- 2000 182 566
- US-A- 6 106 628

## Beschreibung

Die Erfindung betrifft eine Bestrahlungsvorrichtung, aufweisend ein Gehäuse mit einem Innenraum und einem darin angeordneten Infrarotstrahler, der ein Strahlerrohr aus hochkieselsäurehaltigem Glas mit Rundquerschnitt und vorgegebenem Außendurchmesser, mit darin angeordnetem band- oder wendelförmigem Heizfilament aufweist, welches mit elektrischen Anschlusselementen aus einem metallischen Werkstoff versehen ist, die über eine Abdichtung aus dem Strahlerrohr herausgeführt sind, wobei sich mindestens eines der Strahlerrohr-Enden in einen Außenraum erstreckt, welcher vom Innenraum über ein an dem Strahlerrohr außen anliegendes Dichtelement fluidisch getrennt ist.

### Stand der Technik

Eine derartige Bestrahlungsvorrichtung ist aus der DE 10 2008 063 677 A1 bekannt. Bei dieser ist ein Infrarotstrahler in einer Vakuum-Prozesskammer angeordnet. Die Strahlerrohr-Enden sind aus der Vakuum-Prozesskammer herausgeführt, wobei zur Abdichtung der Vakuum-Prozesskammer O-Ringe vorgesehen sind. Innerhalb des Strahlerrohrs ist eine Heizwendel angeordnet, deren Stromversorgung beiderseits über eine gasdichte Abdichtung in Form einer Quetschung mit darin eingeschlossener Molybdänfolie herausgeführt ist.

Quetschungen sind grundsätzlich nachteilig. Sie sind aufwendig zu fertigen, und sie begrenzen die Lebensdauer des Infrarotstrahlers und dessen Leistung, wie im Folgenden noch näher ausgeführt wird.

Zur Herstellung der Quetschungen werden Quetschmaschinen eingesetzt, welche beispielsweise zwei um das zu quetschende Quarzglasrohr rotierende Brenner und zwei sich gegenüberliegende Quetschbacken aufweisen. Sobald das Quarzglasrohr erweicht ist, stoppt die Brenner-Rotation, so dass die Quetschbacken an den Brennern vorbei gegen das Quarzglasrohr bewegt werden und dieses zusammenpressen, um die darin eingelegte Molybdänfolie sowie die beiderseits abgehenden Anschlussstifte in der Quetschung einzuschließen. Die Quetschungen haben eine gewisse Längserstreckung, die sich aus der Länge der Folie und beidseitig davon einem Bereich für die Quarzglasdichtung ergibt; typische Längen der Quetschung sind 25 bis 40 mm. In der Praxis ist es schwierig, die metallischen Bauteile der Quetschung, also die beiderseitigen Anschlussstifte und die Metallfolie exakt fluchtend einzurichten, oder den nach außen gehenden Metallstift genau mittig zu fixieren. Infolgedessen sind die außen
angebrachten Anschlussdrähte oder Sockel großzügig zu tolerieren, beziehungsweise müssen entsprechende Sockel-Halter oder Fassungen über Toleranzen von einigen mm verfügen. Dies erschwert raumsparende, exakte Fassungen oder Kontaktierungen für solche Strahler.

Bei Bestrahlungsvorrichtungen stellt sich häufig die Aufgabe, den Innenraum gegenüber der Umgebung abzudichten, beispielsweise wenn im Innenraum eine hohe Temperatur oder eine Druckdifferenz aufrecht erhalten werden soll, oder wenn darin Gase oder Flüssigkeiten vorkommen, die nicht in die Umgebung gelangen sollen. In Fällen bei denen der Infrarotstrahler die Kammerwandung durchdringt ist an der Durchdringungsstelle ebenfalls eine Dichtung vorzusehen. Dabei machen sich weitere Probleme infolge der Quetschung bemerkbar.
- Beim Formen der Quetschung wird diese breiter als der Außendurchmesser des Quarzglasrohres. Dieser Effekt kann zwar unter Inkaufnahme eines höheren Umformungsgrads des Quarzglasrohres vermieden werden, was jedoch zu einer höhere Ausschussrate in der Fertigung führt. Dichtungen am Außenumfang des Hüllrohres haben daher in der Regel Spiel, um eine etwas breitere Quetschung passieren lassen zu können.
- Die beträchtliche plastische Verformung des Quarzglasrohres an den Quetschenden setzt sich - wenn auch in schnell abnehmendem Maß - in Richtung Rohrmitte fort. Die Abdichtung am Außenumfang des Quarzglasrohres erfolgt aber am einfachsten mit einem verformungsarmen, möglichst kreisrunden Außenumfang. Daher kann der verformte Bereich des Quarzglasrohres nicht in den Reaktorraum eintauchen, was einen Verlust an wirksamer Strahlerlänge bedeutet.
- Die Leistung eines Infrarotstrahlers hängt zudem vom Innendruck ab. Quetschungen halten den hohen Betriebsinnendrücken von beispielsweise mehr als 10⁶ Pa jedoch nicht stand, die sich bei einem Fülldruck von mehr als 10⁵ Pa im kalten Zustand (Umgebungstemperatur) ergeben.

In Bezug auf die Abdichtung gegen einen Prozessraum ergibt sich eine weitere Schwierigkeit bei Infrarotstrahlern mit halogenhaltigem Füllgas. Dieses wird eingesetzt, um der Abdampfung von Wolfram und damit der Verkürzung der Lebensdauer entgegen zu wirken. Dabei darf jedoch die Temperatur im Inneren des Infrarotstrahles im Betrieb 250°C nicht unterschreiten, da es ansonsten zur Kondensation von Wolframhalogeniden kommt. Besonders gefährdet sind in dieser Hinsicht die Enden des Strahlerrohres. Um hier Unterkühlungen entgegenzuwirken, werden besonders kurze Strahlerrohr-Enden angestrebt, die hohe Temperaturen bis zu den Strahlerrohr-Enden führen. Die hohen Temperaturen verhindern jedoch den Einsatz von Kunststoffdichtungen in diesem Bereich und gefährden zudem die Lebensdauer der Quetschung, da die Molybdänfolie korrodiert, wenn sie dauerhaft einer Temperatur von mehr als 250 °C ausgesetzt ist.

Die Leistung von Infrarotstrahlern ist zudem durch die verhältnismäßig geringe Strombelastbarkeit der Quetschungen beschränkt. Insbesondere bei Anwendungen im Vakuum, wo die maximale elektrische Spannung zur Vermeidung von Überschlägen stark begrenzt ist, wäre es vorteilhaft, deutlich höhere Ströme als die üblichen 12 A bis 20 A zu verwirklichen.

### Technische Aufgabenstellung

Der Erfindung liegt daher die Aufgabe zugrunde, eine Bestrahlungsvorrichtung mit einem Infrarotstrahler langer Lebensdauer und potenziell hoher Leistung, beziehungsweise Leistung pro Länge anzugeben, der außerdem geeignet ist, von einer Dichtung eingefasst zu werden, die Bereiche unterschiedlicher Medien, Temperaturen oder Drücke separiert. Zudem soll die zur Abdichtung benötigte Baulänge möglichst minimiert werden und auf das funktional notwendige beschränkt bleiben.

### Allgemeine Beschreibung der Erfindung

Diese Aufgabe wird ausgehend von einer Bestrahlungsvorrichtung mit den eingangs genannten Merkmalen erfindungsgemäß dadurch gelöst, dass auch das Strahlerrohr-Ende den Rundquerschnitt und den vorgegebenen Außendurchmesser aufweist, und dass zwischen dem elektrischen Anschlusselement und dem Strahlerrohr eine Abdichtung vorgesehen ist, die mindestens ein Übergangsglas umfasst, das einen thermische Ausdehnungskoeffizienten aufweist, der zwischen demjenigen des metallischen Werkstoffs und dem des hochkieselsäurehaltigen Glases liegt.

Bei der erfindungsgemäßen Bestrahlungsvorrichtung ist ein Infrarotstrahler vorgesehen, bei dem auf eine Quetschung für die Stromdurchführung verzichtet wird, und stattdessen eine glasige Dichtmasse zwischen Strahlerrohr und elektrischem Anschlusselement erzeugt wird. Das zur Abdichtung des Strahlerrohrs eingesetzte Übergangsglas hat einen thermischen Ausdehnungskoeffizienten, der zwischen denjenigen des Strahlerrohrglases und dem des Anschlusselements liegt. Es handelt sich insoweit um eine Glas-Metall-Verbindung in so genannter "Sandwichtechnik", die aus vielen Bereichen der Technik hinlänglich bekannt ist, jedoch bisher nicht für den Zweck der Abdichtung und der Stromdurchführung beim Strahlerrohr von Infrarotstrahlern eingesetzt worden ist. Die mit der Quetschung einhergehenden, oben genannten Nachteile können so vermieden werden. Für andere Lampen als Infrarotstrahler, beispielsweise für Quecksilberdampflampen, sind derartige gasdichte Abdichtungen mit mindestens einem Übergangsglas an und für sich bekannt. Beispielsweise ist aus der DE 663 337 A für eine Hochdruckquecksilberdampfentladungsröhre ein Verfahren zum Einschmelzen von Wolframdraht in ein Strahlerrohr aus Quarzglas bekannt. Zur Erzeugung einer gasdichten Abdichtung ist der Wolframdraht in ein oder mehrere Übergangsglasschichten mit abgestuften Ausdehungskoeffizienten eingeschmolzen, wobei die Ausdehunungskoeffizienten an denjenigen des Quarzglases beziehungsweise des Wolframdrahtes angepasst sind. Auch die GB 952 939 A ist auf eine Quecksilberdampflampe mit einem röhrenförmigen Strahlerrohr aus Quarzglas gerichtet, bei dem zur gasdichten Abdichtung an den Strahlerrohr-Enden ein Übergangsglas vorgesehen ist, durch das ein Zuführungsdraht aus Wolfram geführt ist. In dem Strahlerrohr ist ein bandförmiges Filament aus Wolfram angeordnet, dessen Enden mit einem Zuführungsdraht aus Wolfram verschweißt sind.

Im Unterschied dazu ist die erfindungsgemäße Bestrahlungsvorrichtung zur Bestrahlung eines Objekts mit einem Infrarotstrahler mit einseitig oder beidseitig unverformten Enden ausgestattet.

Erfindungsgemäß ist ein Gehäuse vorgesehen, das einen von einem Außenraum isolierten Innenraum aufweist. In dem Innenraum sind eine oder mehrere Infrarotlampen angeordnet. Das zu bestrahlende Objekt kann in dem Innenraum oder außerhalb davon angeordnet sein.

Der Innenraum kann beispielsweise zur Erzeugung konstanter Bestrahlungs-bedingungen einen Zulauf und einen Ablauf für ein Kühlmittel oder ein Spül- oder Prozessgas aufweisen, so dass er von einem Fluid durchströmt werden kann.

Bei der erfindungsgemäßen Bestrahlungsvorrichtung erstreckt sich der Infrarotstrahler durch die Wandung des Innenraumes, wobei zwischen dem Außenumfang des Infrarotstrahlers und der Kammerwandung ein Dichtelement vorgesehen ist, das den Innenraum und den Außenraum fluidisch voneinander trennt. Das Dichtelement kann gleichzeitig zur mechanischen Lagerung und Fixierung des Infrarotstrahlers eingesetzt werden.

Durch die Abdichtung des Endes oder der Enden des Strahlerrohrs mittels Übergangsglas wird eine zentrische Stromdurchführung auf engem Raum ermöglicht, und eine plastische Verformung des Strahlerrohrs wird verhindert. Dadurch ergibt sich eine Platz sparende, kompakte Bauweise, insbesondere für die Stromdurchführung und den elektrischen Anschluss nach außen und zugleich eine hohe Lebensdauer des Infrarotstrahlers auch bei hoher Leistung.

Das Heizfilament ist beidseitig mit Anschlusselementen für die elektrische Versorgung versehen. Die Stromdurchführung zu den Anschlusselementen erfolgt über ein Ende des Strahlerrohres, wobei das andere Ende verschlossen sein kann, oder sie erfolgt über beide Enden des Strahlerrohrs. Wesentlich ist, dass das Ende des Strahlerrohrs, über das die Stromdurchführung erfolgt, keine Verformung gegenüber den anderen Bereichen des Infrarotstrahlers aufweist, also insbesondere denselben Rundquerschnitt und denselben Außendurchmesser aufweist, wie der Mittelteil des Infrarotstrahlers. Dies ermöglicht eine einfache Abdichtung des Strahlerrohrs mit einem Dichtring.

Das Strahlerrohr besteht aus hochkieselsäurehaltigem Glas. Darunter wird hier Quarzglas oder so genanntes "Vycor-Glas" verstanden, sowie allgemein Glas mit einem SiO₂-Anteil von mindestens 90 Gew.-%.

Um die gewünschte Zentrizität des Anschlusselements zu gewährleisten, wird die Abdichtung beispielsweise unter Einsatz einer glasdrehbankähnlichen Vorrichtung ausgeführt.

Die Herstellung der Abdichtung umfasst bevorzugt Verfahrensschritte, in denen ein desoxidierter Oberflächenbereich des Anschlusselements mit einer umlaufenden Schicht aus alkalifreiem Glas überzogen, und auf der umlaufenden Schicht anschließend ein umlaufender Wulst aus einem weiteren alkalifreien Glas aufgesetzt wird.

Um eine gute Haftung und Dichtheit der Dichtmasse zu gewährleisten, wird das chemisch gereinigte und von Oxid möglichst vollständig befreite Anschlusselement mit einer dünnen Schicht alkalifreien Glases überzogen. Diese zeichnet sich durch einen zum Werkstoff des Anschlusselements passenden thermischen Ausdehnungskoeffizienten und eine gute Haftfähigkeit aus. Darauf wird die eigentliche Dichtmasse in Form eines umlaufenden Wulstes oder mehrere übereinander umlaufender Wülste aufgebracht. Ausgehend von diesem Wulst wird sodann das Anschlusselement mit dem Strahlerrohr und gegebenenfalls mit weiterem Übergangsglas meist unter Ausformung eines domartigen Übergangs verschmolzen.

In einer bevorzugten Ausgestaltung der erfindungsgemäßen Bestrahlungsvorrichtung ist vorgesehen, dass der Infrarotstrahler ein kurzwelliger Infrarotstrahler ist.

Bei einem kurzwelligen Infrarotstrahler steht eine hohe Heizleistung sehr schnell zur Verfügung, so dass schnelle Temperaturwechsel und ein schnelles Erwärmen, beispielsweise eines zu bestrahlenden Objektes, ermöglicht werden. Kurzwellige Infrarotstrahler erzeugen besonders hohe Temperaturen, was in der Regel ein geschlossenes Strahlerrohr zum Schutz des Heizelements erfordert.

Bei einer besonders bevorzugten Ausführungsform des erfindungsgemäßen Infrarotstrahlers enthält der Innenraum ein halogenfreies Füllgas.

Der Innenraum ist beispielsweise mit Argon oder mit einem anderen Edelgas gefüllt. Daher kann auf die Aufrechterhaltung einer hohen Temperatur auch am Bereich des Strahlerrohr-Endes verzichtet werden, oder das Strahlerrohr oder Teile des Strahlerrohres können sogar zwangsgekühlt werden. Dies ermöglicht den Einsatz einer Dichtung in diesem Bereich, die aus einem nicht hochtemperaturfesten Material bestehen kann, wie etwa aus Kunststoff.

Die Zwangskühlung kann auch auf den Bereich des Strahlers wirken, der das Heizfilament umfasst, während die Anschlussenden vermittels einer Dichtung von diesem gekühlten Bereich getrennt sind.

In dem Zusammenhang hat es sich bewährt, wenn der Innenraum des Strahlers eine Gettersubstanz enthält, insbesondere Niob, Zirkon, Tantal, Phosphor, Barium oder Verbindungen dieser Substanzen.

Derartige Gettersubstanzen sind geeignet, reaktive Verunreinigungen des Füllgases, wie Sauerstoff, Wasserstoff oder Kohlenstoff zu binden und so die Lebensdauer des Heizfilaments zu verlängern.

Bei einer weiteren bevorzugten Ausführungsform des Infrarotstrahlers ist vorgesehen, dass das Strahlerrohr ein Füllgas enthält, derart dass unter Betriebsbedingungen ein Innendruck von mindestens 1 MPa auftritt.

Die Druckangabe bezieht sich auf den Zustand im Betrieb des Infrarotstrahlers, also bei Betriebstemperatur. Herkömmliche Infrarotstrahler mit Quetschungen haben hier einen deutlich niedrigeren Innendruck um 0,3 bis 0,4 MPa. Durch den hohen Innendruck kann einerseits eine vergleichsweise höhere Nominalleistung realisiert werden, und andererseits wirkt sich ein höherer Innendruck auch lebensdauerverlängernd aus. Ein Innendruck im kalten Zustand von über 0,2 MPa ist bei Infrarotstrahlern mit Quetschungen nicht möglich, da diese dem Druck aufgrund der unsymmetrisch geformten Quetschung auf Dauer nicht standhalten.

Die Abdichtung kann zwischen der Innenwandung des Strahlerrohres und dem Anschlusselement erfolgen. Es hat sich aber eine Ausführungsform des Infrarotstrahlers als besonders vorteilhaft erweisen, bei der das Strahlerrohr-Ende eine umlaufende Stirnseitenfläche aufweist, wobei die Abdichtung zwischen dem Anschlusselement und der Stirnseitenfläche erfolgt.

Die Dichtmasse der Abdichtung verläuft hierbei vorzugsweise in einem Bogen zwischen der Mantelfläche des Anschlusselements und der Stirnseitenfläche des Strahlerrohrs. Dadurch wird die Dichtmasse in axialer Richtung an die Stirnseite des Strahlerrohrs herangeführt. Dies erleichtert einerseits die Herstellung der Abdichtung und wirkt andererseits der Ausbildung von Kräften, die in radialer Richtung auf das Strahlerrohr wirken, möglichst entgegen.

Das Heizfilament besteht beispielsweise aus Carbon oder aus Wolfram. Vorzugsweise bestehen das Heizfilament und die elektrischen Anschlusselemente aus ein und demselben Werkstoff, bevorzugt aus Wolfram oder einer Wolframbasislegierung.

Heizelemente aus Wolfram und Wolframbasislegierungen zeichnen sich durch eine hohe Temperaturbeständigkeit und Langlebigkeit aus und haben sich bei Infrarotstrahlern seit langem bewährt.

Alternativ dazu ist das Anschlusselement aus Molybdän oder einer Molybdänverbindung ausgeführt. Dieser Werkstoff wird auch für zusätzliche Bauteile im Inneren des Infrarotstrahlers, wie Federn, Klammern, Halteelemente oder Adapter bevorzugt.

Als Übergangsglas kommt vorzugsweise ein alkalifreies Borosilikatglas in Betracht.

Borosilikatgläser sind relativ einfach bei einer im Vergleich zu Quarzglas niedrigen Temperatur zu verarbeiten und sie zeichnen sich insbesondere durch hohe chemische Beständigkeit aus.

Es hat sich bewährt, wenn die Dichtmasse zwei Übergangsgläser aufweist.

Das erste Übergangsglas ist dabei dem elektrischen Anschlussbauteil des Heizfilaments zugeordnet und weist einen thermischen Ausdehnungskoeffizienten auf, der kleiner ist als der des Anschlusselements. Das zweite Übergangsglas ist dem Strahlerrohr zugeordnet und weist einen thermischen Ausdehnungskoeffizienten auf, der zwischen dem des Strahlerrohres und dem des ersten Übergangsglases liegt.

Es hat sich außerdem bewährt, wenn das elektrische Anschlusselement mindestens im Bereich der Abdichtung einen runden Querschnitt aufweist.

Das elektrische Anschlusselement mit rundem Querschnitt lässt zum Strahlerrohr einen ringförmigen Spalt, der sich im Vergleich zu anderen Spaltgeometrien einfacher abdichten lässt, und der sich wegen der Axialsymmetrie vorteilhaft auf den Verlauf mechanischer Spannungen innerhalb der Abdichtung auswirkt.

Je größer der Querschnitt des elektrischen Anschlusselements ist, umso höher kann die nominale Leistung des Infrarotstrahlers ausgelegt sein. Eine Quetschung und die darin eingeschmolzene Metallfolie begrenzen den übertragbaren Strom. Beim erfindungsgemäßen Infrarotstrahler entfällt diese Begrenzung. Im Hinblick auf eine möglichst hohe Nominal-Leistung haben die elektrischen Anschlusselemente vorzugsweise einen Durchmesser von mindestens 1,5 mm, besonders bevorzugt mindestens 2,0 mm.

Eine weitere erfindungsgemäße Ausführungsform sieht vor, dass zumindest auf einer Seite zumindest im Bereich der vorgesehenen Dichtung das Strahlerrohr symmetrisch zur Strahlerachse einen größeren Durchmesser aufweist, als der Rest des Strahlerrohres, dass jedoch beide Bereiche jeweils aus Rohrabschnitten hoher Parallelität und Rundheit bestehen, so dass jeweils die Dichtung wie oben beschrieben ausgeführt wird.

Es hat sich als vorteilhaft erwiesen, dass in dem Gehäuse mehrere Infrarotstrahler nebeneinander angeordnet sind, und dass zur Halterung und zur elektrischen Kontaktierung der Infrarotstrahler im Außenraum eine Stromschiene vorgesehen ist.

Die Infrarotstrahler sind in dem Gehäuse nebeneinander angeordnet, wobei sich die Strahler-Enden beidseitig oder einseitig in einen Außenraum erstrecken. Der Außenraum befindet sich außerhalb oder innerhalb des Gehäuses. Im Außenraum sind eine oder mehrere Stromschienen vorgesehen. Die Stromschienen sind beispielsweise paarweise so angeordnet, dass sich die Infrarotstrahler zwischen jeweils einem Stromschienen-Paar erstrecken. Sie können zur Aufnahme, Halterung und/oder zur elektrischen Kontaktierung eines oder mehrerer Infrarotstrahler eingesetzt werden.

Die Verwendung der Stromschienen ist insbesondere bei einer Ausführungsform mit einem evakuierbaren Innenraum bevorzugt. Bei freier Verlegung stromführender Kabel (Litzen) in einem evakuierten Raum ist die maximale Spannung auf ca. 80 bis 100 V begrenzt, da es bei höheren Spannungen zu Überschlägen kommen kann. Bei diesen Überschlägen handelt es sich um Gasentladungen, die sich zwischen Bereichen unterschiedlichen Potentials ausbilden können, und die, einmal gezündet, durch Verdampfen von Metallen sich selber erhalten und so zu erheblichen Schäden im Inneren einer Vakuumanlage führen können. Um dies zu vermeiden ist die Stromschiene bei der Erfindung in einem separaten Außenraum angeordnet, der mit einem Gas gefüllt ist. Zur Vermeidung von Überschlägen zwischen der Stromschiene und der Umgebung sind Außen- und Innenraum beispielsweise über einen nicht leitenden wärmebeständigen Kunststoff voneinander getrennt.

Zudem hat es sich als besonders vorteilhaft erweisen, wenn zwei Stromschienen vorgesehen sind, wobei die erste Stromschiene eine Aufnahme für einen ersten Sockel des Infrarotstrahlers und die zweite Stromschiene eine Aufnahme für einen zweiten Sockel

des Infrarotstrahlers und in Richtung einer Infrarotstrahler-Längsachse eine Öffnung aufweist, deren Öffnungsweite mindestens so groß ist wie der Außendurchmesser des Strahlerrohrs.

Zwei Stromschienen gewährleisten eine einfache Kontaktierung, sowie eine einfache Montage der Infrarotstrahler nebeneinander. Ein besonders einfacher und schnell durchzuführender Ein- und Ausbau des Infrarotstrahlers wird durch die Öffnung der zweiten Stromschiene gewährleistet. Der Infrarotstrahler wird beim Einbau in Richtung der Aufnahme der ersten Stromschiene durch die Öffnung der zweiten Stromschiene hindurchgeschoben, so dass eine elektrische Kontaktierung und mechanische Halterung des ersten InfrarotstrahlerSockels in der ersten Aufnahme gewährleistet ist. Um ein Durchschieben des Infrarotstrahlers zu gewährleisten, ist die Öffnungsweite der Öffnung mindestens so groß wie der Außendurchmesser des Strahlerrohrs zu wählen. Die zweite Stromschiene weist eine Aufnahme für den zweiten Sockel des Infrarotstrahlers auf. Deren Öffnung kann anschließend verschlossen werden.

Es hat sich als vorteilhaft erwiesen, wenn die Aufnahme für den zweiten Sockel einen Innendurchmesser aufweist, der dem Innendurchmesser der Öffnung entspricht.

Eine Aufnahme für den zweiten Sockel mit einem Innendurchmesser, der an den Innendurchmesser der Öffnung und damit des Strahlerrohres angepasst ist, ermöglicht, dass das Strahlerrohr in Richtung seiner Längsachse durch die Aufnahme hindurchgeschoben werden kann. Hierzu kann der Innendurchmesser der Aufnahme genauso groß oder größer als der Innendurchmesser der Öffnung sein. Dadurch, dass der Innendurchmesser der Aufnahme dem Innendurchmesser der Öffnung entspricht, wird erreicht, dass der in der Aufnahme aufzunehmende zweite Sockel des Infrarotstrahlers sowohl die Öffnung passieren kann, als auch exakt und mit elektrischem Kontakt in die Aufnahme der zweiten Stromschiene passt. Dadurch wird eine kompakte Bauform des Infrarotstrahlers gewährleistet.

Es hat sich bewährt, dass eine Seite der elektrischen Kontaktierung als Sternpunkt einer Sternschaltung oder als Nullleiter ausgeführt ist.

Bei einer elektrischen Kontaktierung, die als Sternpunkt einer Sternschaltung oder als Nullleiter ausgeführt ist, ist die Potentialdifferenz zwischen der Stromschiene und dem Innenraum so gering, dass keine Umhüllung zur Verhinderung von Überschlägen benötigt wird. Die Strahler können frei liegend kontaktiert werden.

In einer besonders bevorzugten Ausführungsform ist die Bestrahlungsvorrichtung als mobiles Bestrahlungsgerät für kosmetische Zwecke ausgebildet.

In der Kosmetik werden Bestrahlungsvorrichtungen mit Infrarotstahlern beispielsweise zur Haar-Entfernung eingesetzt. Für diesen Zweck ist es besonders vorteilhaft, wenn die Bestrahlungsvorrichtung leicht an die zu behandelnde Stelle herangebracht werden kann. Hier-für sind mobile Bestrahlungsgeräte geeignet.

Im Hinblick hierauf hat es sich bewährt, wenn eine Kühlung für den Infrarotstrahler und ein Lichtleiter zur Übertragung vom Infrarotstrahler ausgehender Infrarotstrahlung vorgesehen sind.

Die Gefahr von Hautverbrennungen ist beispielsweise von der Strahlungsleistung des Infrarotstrahlers, der Expositionsdauer und vom Hauttyp abhängig. Durch eine Kühlung wird eine gleichmäßige Strahlungsleistung des Infrarotstrahlers gewährleistet und dadurch die Gefahr von unvorhergesehenen Temperaturänderungen und damit einhergehenden Hautverbrennungen reduziert. Darüber hinaus kann auch durch eine Kühlung in Form einer Flüssigkeitsschicht durch deren Absorptionseigenschaften, beispielsweise auch der Anteil hautschädigender Strahlung vermindert werden.

Ein Lichtleiter dient zur gezielten Übertragung und Leitung der erzeugten Infrarotstrahlung an einen Bestrahlungsort. Der Lichtleiter kann starr oder flexibel ausgebildet sein. Zur Bündelung der Strahlung kann auf das Gehäuse ein Reflektor aufgebracht sein oder es kann selbst als Reflektor ausgebildet sein.

In einer Variante dieser Ausführungsform ist vorgesehen, dass der Lichtleiter Teil des Gehäuses ist.

Ein Lichtleiter, der gleichzeitig Teil des Gehäuses ist, ermöglicht eine kompakte Bauform der erfindungsgemäßen Bestrahlungsvorrichtung. Gleichzeitig kann auf ein für Infrarotstrahlung transparentes Bauteil des Gehäuses, an dem zusätzliche Strahlungsverluste auftreten können, verzichtet werden, so dass eine energieeffizientere Bestrahlungsvorrichtung erhalten wird.

In einer anderen, ebenso bevorzugten Ausführungsform der erfindungsgemäßen Bestrahlungsvorrichtung ist vorgesehen, dass der Innenraum eine Aufnahme für ein zu bestrahlendes Substrat aufweist.

Eine Aufnahme für ein zu bestrahlendes Substrat im Innenraum der Bestrahlungsvorrichtung ermöglicht eine direkte Bestrahlung des Substrates ohne Zwischenschaltung eines Infrarotstrahlung absorbierenden Werkstoffs und hat den Vorteil, dass der Abstand zwischen Infrarotstrahler und Substrat möglichst klein gewählt werden kann. Beides begünstigt einen hohen und effizienten Energieeintrag.

Hierbei hat es sich bewährt, wenn der Innenraum evakuierbar ausgebildet ist.

Die erfindungsgemäße Bestrahlungsvorrichtung ist insbesondere für die Bestrahlung im Vakuum geeignet. Wegen der Trennung von Stromschienen und evakuiertem Behandlungsraum besteht die Gefahr von elektrischen Überschlägen nicht.

### Ausführungsbeispiel

Nachfolgend wird die Erfindung anhand von Ausführungsbeispielen und einer Zeichnung näher erläutert. Dabei zeigt in schematischer Darstellung
- **Figur 1**: eine erste Ausführungsform der erfindungsgemäßen Bestrahlungsvorrichtung mit einem Infrarotstrahler bei einem Einsatz in einem Handgerät für kosmetische Bestrahlungszwecke, und
- **Figur 2**: eine zweite Ausführungsform der erfindungsgemäßen Bestrahlungsvorrichtung mit einem Infrarotstrahler bei einem Einsatz in einer Vakuumbestrahlungsvorrichtung.

### Beispiel 1

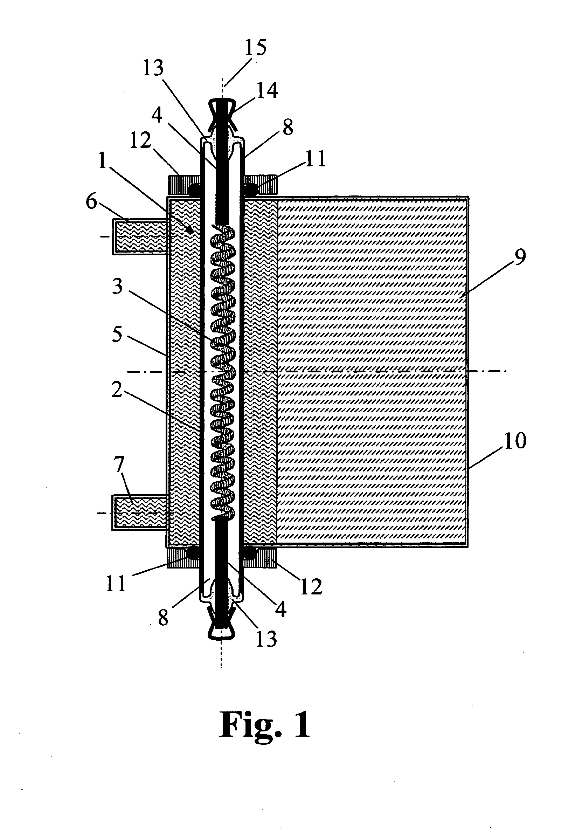

**Figur 1** zeigt schematisch ein Bestrahlungsgerät für kosmetische Zwecke, das in der Hand gehalten wird. Es ist mit einem Infrarotstrahler 1 ausgestattet, bei dem es sich um einen kurzwelligen IR-Strahler mit einer Nominalleistung von 250 W handelt.

Der Infrarotstrahler 1 hat einen axialsymmetrischen Strahlerrohr 2 aus Quarzglas mit rundem Querschnitt und einem Außendurchmesser von 10 mm und einer Länge von 100 mm. Die Enden des Strahlerrohres 2 sind unverformt und haben denselben Querschnitt und Durchmesser wie der Mittelteil des Strahlerrohres 2.

Das Strahlerrohr 2 umschließt gasdicht einen Innenraum, in dem ein wendelförmiges Heizfilament 3 aus Wolfram mit einer (beheizten) Länge von 50 mm angeordnet ist, und der mit Argon (ohne Halogenzusatz) gefüllt ist. Die Enden der Heizwendel 3 sind jeweils mit einem runden elektrischen Anschlussstift 4 mit einem Außendurchmesser von 2 mm, ebenfalls aus Wolfram, verschweißt. Die Anschlussstifte 4 sind aus den gegenüberliegenden offenen Stirnseiten des Strahlerrohres 2 über eine Länge von jeweils 10 mm herausgeführt. Über diese Anschlussstifte 4 ist jeweils eine Kontakthülse 14 aus Edelstahl mittels Hartlot fixiert. Andere Hülsenmaterialien, die thermisch beständig sind und geringe Übergangswiderstände aufweisen, wie Nickel, Kupferlegierungen oder vergoldete Elemente können auch eingesetzt werden.

Der Infrarotstrahler 1 ist wassergekühlt und zu diesem Zweck koaxial von einem Gehäuse 5 aus Aluminium umgeben, die mit einem Wassereinlass 6 und mit einem Wasserauslass 7 versehen ist. Die Innenwandungen des Gehäuses 5 sind poliert und dienen als Reflektor, so dass ein möglichst hoher Anteil der IR Strahlung, die aus dem Infrarotstrahler 1 in den wasserdurchspülten Bereich eintritt, auf einen im Gehäuse 5 wasserdicht eingelassenen Lichtleiterstab 9 aus Glas gelenkt wird, der diese Strahlung mittels Totalreflektion zu einem Strahlenaustrittsfenster 10 des Gehäuses 5 führt, wo sie für die medizinische oder kosmetische Behandlung zur Verfügung steht.

Die (nicht beheizten) Enden 8 des Infrarotstrahlers 1 ragen aus dem Gehäuse 5 heraus und sind mittels O-Ring 11 aus Viton gegenüber dem Innenraum abgedichtet. Hierzu sind beidseitig der Gehäusewandung Anpressplatten 12 vorgesehen, die den O-Ring 11 zentrieren und gegen das Strahlerrohr 2 drücken. Die O-Ringe 11 dienen somit gleichzeitig zur mechanischen Lagerung und Fixierung des Infrarotstrahlers 1. Zur Montage kann der Infrarotstrahler 1 von einer Seite in die Dichtungen eingeschoben werden.

Zur Herstellung der Dichtung 13 werden die Anschlussstifte 4 in Säure gereinigt, und dabei eine etwaige Oxidschicht entfernt. Auf die oxidfreien Anschlussstifte 4 wird jeweils über einen Länge von 10 mm ein alkalifreies Borosilikatglas dünn aufgetragen, das unter der Bezeichnung "Glass 8487" der Schott AG im Handel ist. Die Schichtdicke ist etwa 1/10 des Durchmessers des Stiftes 4, also etwa 0,2 mm. Anschließend wird ein umlaufender Wulst aus demselben Glas aufgesetzt. Dieser Wulst wird sodann auf einer Glasdrehbank durch Aufsetzen von weiterem Glas und durch Ausbilden eines kuppelförmigen Überganges 13 mit der Stirnseite des Strahlerrohrs 2 verbunden. Und zwar zuerst auf der einen Seite und dann auf der zweiten Seite. Hierbei muss jeweils große Sorgfalt auf das richtige Positionieren von Strahlerrohr 2 und erstem Anschlussstift 4 verwendet werden, wie auch bei der Verbindung des zweiten Stiftes 4 mit dem Strahlerrohr 2, wobei nun zusätzlich der benötigte Zug auf die zwischen den Stiften 4 montierte Wendel aufzubringen ist.

Die ringförmige Unterseite des kuppelförmigen Überganges 13 stößt dabei in gerader Linie in Richtung der Längsachse 15 auf die Strahlerrohr-Stirnseite. Der Anschlussstift 4 ragt durch die Mitte der "Kuppel" der Übergangs und ist beiderseits davon von einer hülsenförmigen Schicht der Dichtmasse umhüllt. Auf diese Weise werden radiale Spannungen auf das Strahlerrohr 2 beim Aufheizen und Abkühlen weitgehend vermieden.

Das verwendete Dicht-Glas hat einen thermischen Ausdehnungskoeffizienten von 3,9 x 10⁻⁶ K⁻¹, der somit größer ist als der von Quarzglas (etwa 0,6 x 10⁻⁶ K⁻¹) und kleiner als der von Wolfram mit etwa 4,5 x 10⁻⁶ K⁻¹ (jeweils ermittelt nach ISO 7991 im Temperaturbereich von 20°C bis 3000 °C).

Da das Strahlerrohr 2 keine Quetschenden und Sockel aufweist, kann die elektrische Kontaktierung der Anschlussstifte 4 über übliche Steck-, Klemm-, Schraub- oder Crimpkontakte außerhalb des Gehäuses 5 an Luft und in direkter Nähe zu dem wassergekühlten Bereich erfolgen, so dass eine kompakte Bauform des Geräts erzielt wird. Die Wasserkühlung gewährleistet, dass sich die Oberflächentemperatur des Infrarotstrahlers beim Einsatz auf nicht mehr als etwa 60 °C erhöht und auch im Bereich der nicht gekühlten Stromdurchführungen die Temperatur 150 °C nicht übersteigt.

### Beispiel 2

Im Allgemeinen steht im evakuierten Bereich für Installationen nur ein begrenzter Raum zu Verfügung. Zwar lassen sich Stromschienen in isolierte oder gasgefüllte separate Räume verlegen. Jedoch ist es schwierig, die Strahler so an diese Stromschienen anzuschließen, dass es nicht zu Überschlägen kommt. Auch die Spalte der Abdichtung müssen ausgesprochen eng toleriert sein, um ein Durchschlagen von Überschlägen oder das Ausbilden von oberflächlichen Entladungen zu verhindern.

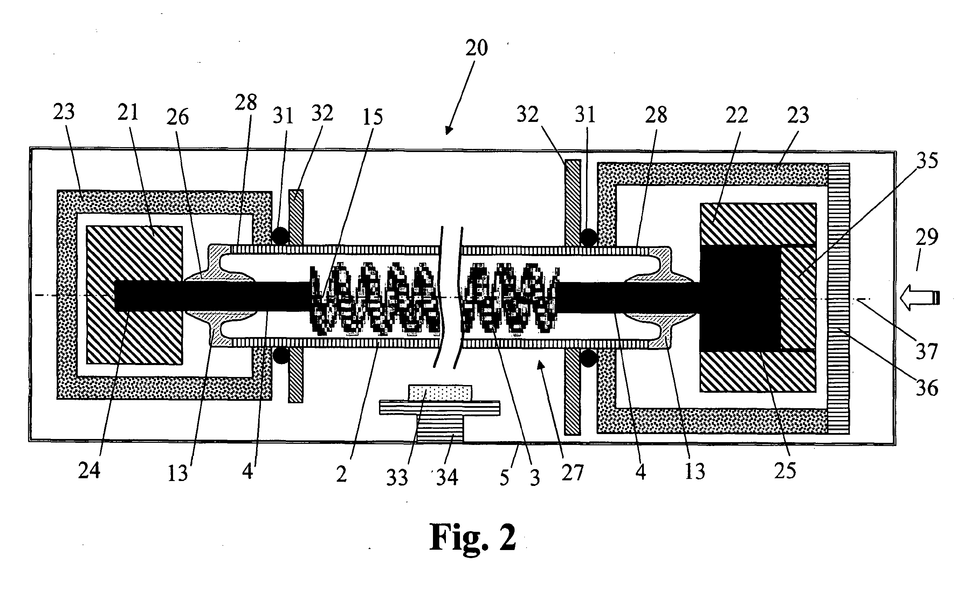

**Figur 2** zeigt schematisch eine Vakuumbestrahlungsvorrichtung für Grob- und Feinvakuum, mit einer Vakuumkammer 20, in der paarweise zwei Stromschienen 21, 22 angeordnet sind. Diese sind jeweils mit einer Umhüllung 23 aus nicht leitendem wärmebeständigem Kunststoff versehen, die Überschläge zwischen Stromschiene 21, 22 und Umgebung verhindert.

In der Umhüllung 23 sind Öffnungen eingebracht, durch die jeweils genau ein Strahlerrohr 2 passt, wobei die im Inneren der Umhüllung 23 liegende Stromschiene 21, 22 axial der Öffnung zusätzlich eine Aufnahme für den ersten und zweiten Sockel 24, 25 des IR-Strahlers 27 aufweist.

Die Stromschienen 21, 22 weisen ein rechteckiges Profil auf, sie sind 660 mm lang, 20 mm breit und hoch und sie sind aus einer Kupferlegierung mit geringer Beimengung von Silber gefertigt In diesen Stromschienen sind jeweils Bohrungen an den vorgesehenen Positionen der Strahler zur Aufnahme der Strahleranschlüsse eingebracht. Die Bohrungen sind im Abstand von 100 mm eingebracht, zudem sind an den Enden im Abstand zu äußersten Bohrung zusätzliche Bohrungen für zwei zusätzliche, randverstärkende Strahler vorgesehen. Die zweite Stromschiene 22 verfügt in Richtung der Strahlerlängsachse 37 gesehen über eine Öffnung, die mit dem Verschlußstück 35 verschlossen werden kann. Die Öffnungsweite der Öffnung beträgt 12 mm. Der Innendurchmesser der Aufnahme für den zweiten Sockel 25 innerhalb der Stromschiene 22 beträgt 11 mm.

IR Strahler 27 mit einem ausreichend langen unbeheizten Bereich von typischerweise 50 mm können nun zwischen den Stromschienen 21, 22 montiert werden. Im Folgenden wird die Art und Weise der Aufnahme eines IR-Strahlers 27 anhand dreier Varianten erörtert:

### Variante 1

Hierzu werden die beidseitig mit den Sockeln 24, 25 versehenen IR-Strahler 27 zuerst einseitig in die das Strahlerrohr dicht umschließende Umhüllung 23 der einen Stromschiene 21 eingeführt, und dabei mit ihrem axial angebrachten Sockel 24 in den zur Aufnahme vorgesehen Kontaktbereich der Stromschiene 21 eingebracht.

Sodann wird auf der anderen Seite die gesamte Einheit von Umhüllung 23 und Stromschiene 22 auf das gegenüberliegende Strahlerende gesteckt.

### Variante 2

Die IR-Strahler 27 werden durch die zweite Stromschiene 22 in Richtung des Blockpfeils 29 hindurch geschoben, so dass sie in Position sind - also ihre Sockel 24 in die erste Stromschiene 21 eingeführt sind, und sich das Strahlerrohr 2 in der Kunststoffummantelung 23 befindet - dann kann die Stromschiene 22 auf der zweiten Seite mit den Strahlersockeln 25 verbunden und die Umhüllung 23 mit dem Verschluss 36 verschlossen werden.

### Variante 3

Alternativ dazu ist eine Seite der elektrischen Kontaktierung als Sternpunkt (einer Sternschaltung) oder als Nullleiter ausgeführt, so dass die Potentialdifferenz zwischen dieser Stromschiene und der Kammer so gering ist, dass keine Umhüllung zur Verhinderung von Überschlägen benötigt wird. Hier können die Strahler also mittels konventioneller Mittel frei liegend elektrisch kontaktiert werden.

Die für die obigen Varianten 1 bis 3 eingesetzten Infrarotstrahler 27 entsprechen in ihrem grundsätzlichen Aufbau dem oben anhand Beispiel 1 beschriebenen, so dass identische Bezugsziffern für gleiche oder äquivalente Bauteile und Bestandteile verwendet werden. Im konkreten Anwendungsfall haben die IR-Strahler 27 ein axialsymmetrisches Strahlerrohr 2 aus Quarzglas mit rundem Querschnitt und einem Außendurchmesser von 10 mm und eine Länge von 1000 mm mit unverformten Enden. Das Strahlerrohr 2 umschließt ein wendelförmiges Heizfilament 3 aus Wolfram mit einer (beheizten) Länge von 900 mm, dessen Enden mit jeweils einem elektrischen Anschlussstift 4 ebenfalls aus Wolfram verschweißt sind. Die Anschlussstifte 4 sind aus den gegenüberliegenden offenen Stirnseiten des Strahlerrohres 2 über eine Länge von jeweils etwa 10 mm herausgeführt und mit den hülsenförmigen Kontakten 24, 25 verbunden.

Die (nicht beheizten) Enden 28 des Infrarotstrahlers 27 sind mittels O-Ring 31 aus Viton gegenüber der Kunststoffumhüllung 23 der Stromschienen 21, 22 zusätzlich abgedichtet. Zur thermischen Abschirmung sind reflektierende Anpressplatten 32 vorgesehen, die den O-Ring 31 zentrieren und gegen das Strahlerrohr 2 drücken. Die O-Ringe 31 dienen somit gleichzeitig zur mechanischen Lagerung und Fixierung des Infrarotstrahlers 27.

Die offenen und unverformten Enden des Strahlerrohres 2 sind mit einer Dichtmasse 13 verschlossen, durch die hindurch sich die Anschlussstifte 4 für die Heizwendel 3 erstrecken. Bei der Dichtmasse 13 handelt es sich in diesem Fall um die beiden folgenden Übergangsgläser. Das Übergangsglas "Glass 8449" hat einen thermischen Ausdehnungskoeffizienten von 4,5 x 10⁻⁶ K⁻¹ und liegt unmittelbar an dem Wolfram-Anschlussstift 4 an. Das Übergangsglas "Glass 8448" hat einen thermischen Ausdehnungskoeffizienten von 3,8 x 10⁻⁶ K⁻¹ und liegt zwischen der Schicht des Glases "Glass 8449" und dem der Stirnseite des Quarzglas-Strahlerrohres 2 an.

Innerhalb der Vakuumkammer 20 ist eine Aufnahme 34 für ein zu bestrahlendes Substrat 33 angeordnet.

Nachfolgend wird die Herstellung der Abdichtung zwischen Wolfram-Anschluss-stift 4 und Innenwandung des Strahlerrohres 2 näher erläutert.

In einem ersten Schritt wird der runde Wolfram-Anschlussstift 4 in Säure gereinigt und desoxidiert. Anschließend wird in glasbläserischer Arbeit eine dünne Lage 26 des Übergangsglases "Glass 8449" um den gesamten Umfang des Anschlussstiftes 4 gelegt. Der Anschlussstift 4 wird daraufhin mit der - ebenfalls vorab gereinigten - Heizwendel 3 verschweißt. Hierbei ist darauf zu achten, dass sich vor dem Aufbringen der Glasschicht 26 auf dem Wolfram dort keine Oxidschicht ausbildet. Dazu wird der Prozess bei reduzierenden Umgebungsbedingungen durchgeführt, oder alternativ wird der Anschlussstift 4 so hoch erhitzt, dass dann die flüchtigen Oxide von Wolfram abdampfen.

Daraufhin wird das Strahlerrohr 2 einseitig in einer Drehbank aufgenommen und in das gegenüberliegende Drehfutter werden Anschlussstift 4 und Heizwendel 3 aufgenommen und in das Strahlerrohr 2 koaxial und exakt zentrisch eingeführt. Die Auflage aus Übergangsglas auf dem Anschlussstift 4 ist niedriger als der Innendurchmesser des Strahlerrohres 2, so dass die Auflage in das Strahlerrohr2 eingeschoben werden kann. Anschließend wird in glasbläserischer Arbeit unter Rotation von Strahlerkolben 2 und Anschlussstift 4 eine Lage des Übergangsglases "Glass 8448" zwischen die vorhandene Auflage 26 und der Innenwandung des Strahlerrohres 2 unter Ausbildung eines kuppelförmigen Übergangs 13 aufgebracht und damit die Stirnseite des Strahlerrohres gasdicht verschlossen, ohne dass es zu einer merklichen Verformung des Strahlerrohres 2 kommt. In äquivalenter Art und Weise werden Abdichtung und Stromdurchführung auf der gegenüberliegenden Stirnseite erzeugt.

Der kuppelförmige Übergang 13 der Abdichtungsmasse verläuft dabei von der Mantelfläche des Anschlussstiftes 4 ausgehend, wo er eine den Anschlussstift hülsenförmig umhüllende Schicht bildet in einem Bogen auf die Strahlerrohr-Stirnseite und trifft auf diese in einer Orientierung in Richtung der Strahlerrohr-Längsachse 15. Der Anschlussstift 4 ragt durch die Mitte der "Kuppel" der Übergangs 13 und ist beiderseits davon von der hülsenförmigen Schicht der Dichtmasse umhüllt.

Anschließend wird das Strahlerrohr 2 über einen (zuvor angebrachten) Pumpstutzen mit einem halogengasfreien Füllgas gefüllt, wie Argon oder Edelgas, und die elektrische Kontaktierung der Anschlussstifte wird vorbereitet. Die exakt zentrische Führung der Stromdurchführung erlaubt eine einfache, platzsparende Steckverbindung für den elektrischen Anschluss.

Für die Ausführung der Dichtung zwischen Wolfram-Anschlussstift 4 und Strahlerrohr 2 können auch andere alkalifreie Gläser, typischerweise Borosilikatgläser mit einem spezifischen thermischen Ausdehnungskoeffizient, der zwischen dem von Wolfram und dem von Quarzglas liegt, eingesetzt werden. Speziell sollte der thermische Ausdehnungskoeffizient zwischen 0,9 10⁻⁶ und 3,0 10⁻⁶ liegen.

## Patentansprüche

1. Bestrahlungsvorrichtung, aufweisend ein Gehäuse (5) mit einem Innenraum und einem darin angeordneten Infrarotstrahler (1; 27), der ein Strahlerrohr (2) aus hochkieselsäurehaltigem Glas mit Rundquerschnitt und vorgegebenem Außendurchmesser, mit darin angeordnetem band- oder wendelförmigem Heizfilament (3) aufweist, welches mit elektrischen Anschlusselementen (4) aus einem metallischen Werkstoff versehen ist, die über eine Abdichtung (13) aus dem Strahlerrohr (2) herausgeführt sind, wobei sich mindestens eines der Strahlerrohr-Enden (8; 28) in einen Außenraum erstreckt, welcher vom Innenraum über ein an dem Strahlerrohr (2) außen anliegendes Dichtelement (11; 31) fluidisch getrennt ist, **dadurch gekennzeichnet, dass** auch das Strahlerrohr-Ende (8; 28) den Rundquerschnitt und den vorgegebenen Außendurchmesser aufweist, und dass zwischen dem elektrischen Anschlusselement (4) und dem Strahlerrohr (2) eine Abdichtung (13) vorgesehen ist, die mindestens ein Übergangsglas umfasst, das einen thermische Ausdehnungskoeffizienten aufweist, der zwischen demjenigen des metallischen Werkstoffs und dem des hochkieselsäurehaltigen Glases liegt.

2. Bestrahlungsvorrichtung Anspruch 1, **dadurch gekennzeichnet, dass** der Infrarotstrahler (1; 27) ein kurzwelliger Infrarotstrahler ist.

3. Bestrahlungsvorrichtung nach Anspruch 1 oder 2, **dadurch gekennzeichnet, dass** das Strahlerrohr (2) ein halogenfreies Füllgas enthält.

4. Bestrahlungsvorrichtung nach einem der vorhergehenden Ansprüche, **dadurch gekennzeichnet, dass** das Strahlerrohr (2) eine Gettersubstanz enthält, insbesondere Niob, Zirkon, Tantal, Phosphor, Barium oder Verbindungen dieser Substanzen.

5. Bestrahlungsvorrichtung nach einem der vorhergehenden Ansprüche, **dadurch gekennzeichnet, dass** das Strahlerrohr (2) ein Füllgas enthält, derart dass unter Betriebsbedingungen ein Innendruck von mindestens 1 MPa auftritt.

6. Bestrahlungsvorrichtung nach einem der vorhergehenden Ansprüche, **dadurch gekennzeichnet, dass** das Strahlerrohr-Ende (8; 28) eine umlaufende Stirnseitenfläche aufweist, und dass die Abdichtung (13) zwischen dem Anschlusselement (4) und der Stirnseitenfläche erfolgt.

7. Bestrahlungsvorrichtung, nach einem der vorhergehenden Ansprüche, **dadurch gekennzeichnet, dass** das Heizfilament (3) und das elektrische Anschlusselement (4) aus Wolfram oder einer Wolframbasislegierung bestehen, oder dass das elektrische Anschlusselement (4) aus Molybdän oder einer Molybdänbasislegierung besteht.

8. Bestrahlungsvorrichtung nach einem der vorhergehenden Ansprüche, **dadurch gekennzeichnet, dass** die elektrischen Anschlusselemente (4) mindestens im Bereich der Abdichtung einen runden Querschnitt aufweisen, und einen Durchmesser von mindestens 1,5 mm, bevorzugt mindestens 2,0 mm, aufweisen.

9. Bestrahlungsvorrichtung nach einem der vorhergehenden Ansprüche, **dadurch gekennzeichnet, dass** in dem Gehäuse (5) mehrere Infrarotstrahler (1; 27) nebeneinander angeordnet sind, und dass zur Halterung und zur elektrischen Kontaktierung der Infrarotstrahler (1; 27) im Außenraum eine Stromschiene (21; 22) vorgesehen ist.

10. Bestrahlungsvorrichtung nach einem der vorhergehenden Ansprüche, **dadurch gekennzeichnet, dass** zwei Stromschienen (21; 22) vorgesehen sind, wobei die erste Stromschiene (21) eine Aufnahme für einen ersten Sockel (24) des Infrarotstrahlers (1; 27) und die zweite Stromschiene (22) eine Aufnahme für einen zweiten Sockel (25) des Infrarotstrahlers (1; 27) und in Richtung einer Infrarotstrahler-Längsachse (37) eine Öffnung aufweist, deren Öffnungsweite mindestens so groß ist wie der Außendurchmesser der Strahlerrohres (2).

11. Bestrahlungsvorrichtung nach Anspruch 10, **dadurch gekennzeichnet, dass** die Aufnahme für den zweiten Sockel (25) einen Innendurchmesser aufweist, der dem Innendurchmesser der Öffnung entspricht.

12. Bestrahlungsvorrichtung nach einem der Ansprüche 9, **dadurch gekennzeichnet, dass** eine Seite der elektrischen Kontaktierung als Sternpunkt einer Sternschaltung oder als Nulleiter ausgeführt ist.

13. Bestrahlungsvorrichtung nach einem der vorhergehenden Ansprüche, **dadurch gekennzeichnet, dass** sie als mobiles Bestrahlungsgerät für kosmetische Zwecke ausgebildet ist.

14. Bestrahlungsvorrichtung nach Anspruch 13, **dadurch gekennzeichnet, dass** eine Kühlung für den Infrarotstrahler (1; 27) und ein Lichtleiter (9) zur Übertragung vom Infrarotstrahler (1; 27) ausgehender Infrarotstrahlung vorgesehen sind.

15. Bestrahlungsvorrichtung nach Anspruch 14, **dadurch gekennzeichnet, dass** der Lichtleiter (9) Teil des Gehäuses (5) ist.

16. Bestrahlungsvorrichtung nach einem der Ansprüche 1 bis 12, **dadurch gekennzeichnet, dass** der Innenraum eine Aufnahme (34) für ein zu bestrahlendes Substrat (33) aufweist.

17. Bestrahlungsvorrichtung nach Anspruch 12, **dadurch gekennzeichnet, dass** der Innenraum evakuierbar ausgebildet ist.

## Claims

1. Irradiation device, comprising a housing (5) having an internal space and, arranged in it, an infrared emitter (1; 27) that comprises a glass with a high silicic acid content with a round cross-section and given external diameter with a tape- or coil-shaped heating filament (3) arranged in it, which is provided with electrical connecting elements (4) made of a metallic material that are guided out of the emitter tube (2) through a sealing (13), whereby at least one of the emitter tube ends (8; 28) extends into an external space that is separated, in terms of fluid communication, from the internal space through a sealing element (11; 31) that touches against the outside of the emitter tube (2), **characterised in that** the emitter tube end (8; 28) also comprises said round cross-section and said given external diameter, and **in that** a sealing (13) is provided between the electrical connecting element (4) and the emitter tube (2) and comprises at least one transition glass comprising a thermal expansion coefficient that is between the one of the metallic material and the one of the glass with a high silicic acid content.

2. Irradiation device according to claim 1, **characterised in that** the infrared emitter (1; 27) is a short-wave infrared emitter.

3. Irradiation device according to claim 1 or claim 2, **characterised in that** the emitter tube (2) contains a halogen-free filling gas.

4. Irradiation device according to any one of the preceding claims, **characterised in that** the emitter tube (2) contains a getter substance, in particular niobium, zirconium, tantalum, phosphorus, barium or compounds of said substances.

5. Irradiation device according to any one of the preceding claims, **characterised in that** the emitter tube (2) contains a filling gas in appropriate manner such that an internal pressure under operating conditions is at least 1 MPa.

6. Irradiation device according to any one of the preceding claims, **characterised in that** the emitter tube end (8; 28) comprises a circumferential front face surface and **in that** the sealing (13) is effected between the connecting element (4) and the front face surface.

7. Irradiation device according to any one of the preceding claims, **characterised in that** the heating filament (3) and the electrical connecting element (4) consist of tungsten or a tungsten-based alloy or **in that** the electrical connecting element (4) consists of of molybdenum or a molybdenum-based alloy.

8. Irradiation device according to any one of the preceding claims, **characterised in that** the electrical connecting elements (4) comprise a round cross-section at least in the region of the sealing and comprise a diameter of at least 1.5 mm, preferably of at least 2.0 mm.

9. Irradiation device according to any one of the preceding claims, **characterised in that** multiple infrared emitters (1; 27) are arranged next to each other in the housing (5) and **in that** a bus bar (21; 22) is provided for bracketing and for electrical contacting of the infrared emitters (1; 27) in the external space.

10. Irradiation device according to any one of the preceding claims, **characterised in that** two bus bars (21; 22) are provided, whereby the first bus bar (21) comprises a receptacle for a first mount (25) of the infrared emitter (1; 27) and the second bus bar (22) comprises a receptacle for a second mount (25) of the infrared emitter (1; 27) and an opening in the direction of an longitudinal axis (37) of the infrared emitter, whereby the width of the opening is at least of the same size as the external diameter of the emitter tube (2).

11. Irradiation device according to claim 10, **characterised in that** the receptacle for the second mount (25) comprises an internal diameter that corresponds to the internal diameter of the opening.

12. Irradiation device according to claims 9, **characterised in that** one side of the electrical contacting is provided as star point of a star circuit or as neutral conductor.

13. Irradiation device according to any one of the preceding claims, **characterised in that** it is provided as mobile irradiation device for cosmetic purposes.

14. Irradiation device according to claim 13, **characterised in that** a cooling for the infrared emitter (1; 27) and a light conductor (9) for transmitting infrared radiation emitted by the infrared emitter (1; 27) are provided.

15. Irradiation device according to claim 14, **characterised in that** the light conductor (9) is part of the housing (5).

16. Irradiation device according to any one of the claims 1 to 12, **characterised in that** the internal space comprises a receptacle (34) for a substrate (33) to be irradiated.

17. Irradiation device according to claim 12, **characterised in that** the internal space is provided appropriately such that it can be evacuated.

## Revendications

1. Dispositif d'irradiation présentant un boîtier (5) avec un espace intérieur et un émetteur de rayons infrarouges (1 ; 27) placé dedans qui présente un tube émetteur (2) en verre à teneur élevée en acide silicique qui possède une section transversale cylindrique et un diamètre extérieur prédéfini et dans lequel est agencé un filament incandescent (3) en forme de bande ou de spirale et muni d'éléments de raccordement électrique (4) en matériau métallique, qui sont guidés hors du tube émetteur (2) en passant par une garniture d'étanchéité (13), sachant qu'au moins une extrémité (8 ; 28) du tube émetteur s'étend dans un espace extérieur qui est séparé fluidiquement de l'espace intérieur par un élément d'étanchéité (11 ; 31) situé à l'extérieur sur le tube émetteur (2), **caractérisé en ce que** l'extrémité (8 ; 28) du tube émetteur présente également la section transversale cylindrique et le diamètre extérieur prédéfini, et qu'une garniture d'étanchéité (13) est prévue entre l'élément de raccordement électrique (4) et le tube émetteur (2), laquelle comprend au moins un verre de transition dont le coefficient de dilatation thermique se situe entre celui du matériau métallique et celui du verre à teneur élevée en acide silicique.

2. Dispositif d'irradiation selon la revendication 1, **caractérisé en ce que** l'émetteur de rayons infrarouges (1 ; 27) est un émetteur de rayons infrarouges à ondes courtes.

3. Dispositif d'irradiation selon la revendication 1 ou 2, **caractérisé en ce que** le tube émetteur (2) contient un gaz de remplissage exempt d'halogène.

4. Dispositif d'irradiation selon l'une des revendications précédentes, **caractérisé en ce que** le tube émetteur (2) contient une substance getter, en particulier du niobium, du zircon, du tantale, du phosphore, du baryum ou des liaisons de ces substances.

5. Dispositif d'irradiation selon l'une des revendications précédentes, **caractérisé en ce que** le tube émetteur (2) contient un gaz de remplissage de telle sorte qu'une pression interne d'au moins 1 Mpa se produit en conditions de service.

6. Dispositif d'irradiation selon l'une des revendications précédentes, **caractérisé en ce que** l'extrémité (8 ; 28) du tube émetteur présente une face latérale frontale circulaire et que la garniture d'étanchéité (13) s'effectue entre l'élément de raccordement (4) et la face latérale frontale.

7. Dispositif d'irradiation selon l'une des revendications précédentes, **caractérisé en ce que** le filament incandescent (3) et l'élément de raccordement électrique (4) sont en wolfram ou dans un alliage à base de wolfram, ou que l'élément de raccordement électrique (4) est en molybdène ou dans un alliage à base de molybdène.

8. Dispositif d'irradiation selon l'une des revendications précédentes, **caractérisé en ce que** les éléments de raccordement électrique (4) présentent au moins au niveau de la garniture d'étanchéité une section transversale cylindrique et un diamètre d'au moins 1,5 mm, de préférence d'au moins 2 mm.

9. Dispositif d'irradiation selon l'une des revendications précédentes, **caractérisé en ce que** plusieurs émetteurs de rayons infrarouges (1 ; 27) sont disposés l'un à côté de l'autre dans le boîtier (5) et qu'une barre conductrice (21 ; 22) est prévue pour la fixation et pour le contact électrique des émetteurs de rayons infrarouges (1 ; 27) dans l'espace extérieur.

10. Dispositif d'irradiation selon l'une des revendications précédentes, **caractérisé en ce que** deux barres conductrices (21 ; 22) sont prévues, sachant que la première barre conductrice (21) présente une réception pour une première base (24) de l'émetteur de rayons infrarouges (1 ; 27) et que la seconde barre conductrice (22) présente une réception pour une seconde base (25) de l'émetteur de rayons infrarouges (1 ; 27) et une ouverture en direction d'un axe longitudinal (37) de l'émetteur de rayons infrarouges, dont la largeur d'ouverture est au moins aussi grande que le diamètre extérieur du tube émetteur (2).

11. Dispositif d'irradiation selon la revendication 10, **caractérisé en ce que** la réception pour la seconde base (25) présente un diamètre intérieur qui correspond au diamètre intérieur de l'ouverture.

12. Dispositif d'irradiation selon la revendication 9, **caractérisé en ce qu'**un côté du contact électrique est exécuté en tant que point neutre d'un montage en étoile ou en tant que conducteur neutre.

13. Dispositif d'irradiation selon l'une des revendications précédentes, **caractérisé en ce qu'**il est conçu en tant qu'appareil d'irradiation mobile à usage cosmétique.

14. Dispositif d'irradiation selon la revendication 13, **caractérisé en ce qu'**un refroidissement est prévu pour l'émetteur de rayons infrarouges (1 ; 27) et qu'un guide de lumière (9) est prévu pour transmettre le rayon infrarouges sortant de l'émetteur de rayons infrarouges (1 ; 27).

15. Dispositif d'irradiation selon la revendication 14, **caractérisé en ce que** le guide de lumière (9) fait partie du boîtier (5).

16. Dispositif d'irradiation selon l'une des revendications 1 à 12, **caractérisé en ce que** l'espace intérieur présente une réception (34) pour un substrat (33) à irradier.

17. Dispositif d'irradiation selon la revendication 12, **caractérisé en ce que** l'espace intérieur est conçu de façon à pouvoir être vidé.
